# EUROPEAN PATENT SPECIFICATION

(11) **EP 0 531 818 B1**
(45) Date of publication and mention of the grant of the patent: **06.11.1996**
(21) Application number: 92114679.1
(22) Date of filing: 27.08.1992
(51) Int. Cl.: H04N 5/21

(54) **A method for removing drop-out noise**
Verfahren zum Unterdrücken von Drop-out-Störungen
Méthode de suppression de perturbation de perte de signal

(30) Priority: 02.09.1991 FI 914124
(43) Date of publication of application: 17.03.1993
(73) Proprietor: SALORA OY, SF-241 00 Salo (FI)
(72) Inventor: Lehtonen, Arto, SF-33700 Tampere (FI)
(74) Representative: Koch, Günther, Dipl.-Ing.

(56) References cited:
- DE-A- 4 001 552
- DE-A- 4 014 971
- US-A- 4 682 230
- IEEE TRANSACTIONS ON CONSUMER ELECTRONICS vol. 36, no. 3, August 1990, NEW YORK, NY, US pages 296-300 RANTANEN ET AL "PROTOTYPING IDTV FUNCTIONS USING PGAS"

## Description

The present invention relates to a method for removing drop-out noise in a television picture, the method using a median filter, wherein the pixels to be used in the filter are selected, in addition to the pixel to be examined, among pixels that either have a different vertical position or come from a picture different from that of the examined pixel.

Among the most important factors having an effect on the quality of the television picture is the signal-to-noise ratio. The picture would easily contain noise if the signal-to-noise ratio is low. The most disturbing noise is the drop-out noise, which can appear in the received television picture, particularly in satellite transmission when signal level is low. The drop-outs typically appear as short horizontal black or white lines.

The picture quality of present television systems may be considerably increased by using digital signal processing techniques. The drop-outs can be removed from the video signal by using special digital filters in the receiver. Non-linear filtering must be used for drop-out filtering, because the drop-outs considerably differ from the original pixel values. Thus the drop-outs would still be visible, if e.g. a linear low-pass filter were used to decompose and equalize the signal. The simplest non-linear filter for removing drop-outs is the vertical three-point median filter. The median filter is well known in digital signal processing. It produces as a result the median of the input samples. The advantage of the median filter compared with e.g. a linear filter is its ability to retain edges and ramps without blurring the picture. The three-point median filter operates on three consecutive lines of the field and efficiently removes the drop-out noise. The filter slightly reduces the vertical resolution. A remedy for this was sought by using a five-point median filter, which more effectively attenuates noise, but it was found that the five-point median filter is no remedy for the reduced vertical resolution. The best result was achieved by using a seven-point median filter. The common disadvantage in the known use of median filters is, however, that in addition to effectively filtering drop-outs they also remove thin horizontal lines belonging to the picture. This disadvantage is particularly disturbing in stationary parts of the picture.

Median filters can be used so that they do not reduce the quality of the picture, but so that they remove such horizontal lines appearing in only one picture but not in others. Such drop-out noise filters are based on operation in both the vertical and the horizontal direction. In other words, in addition to selecting pixels located either horizontally and/or vertically adjacent to the examined pixel as inputs to the median filter, pixels are further selected from different pictures. The patent US-A-4,682,230 discloses a filter system of this type.

DE-A-4 001 552 shows a further example of a median filter for a drop-out compensation.

The object of the present invention is to present a method which ensures that the drop-out pixel does not control the output of the median filter, i.e. so that if the pixel value does not change compared with a different field, then the original pixel is retained, because then this is not a drop-out pixel; and so that the picture remains unchanged and the picture quality is not reduced nor the picture distorted, if their was movement in it. The inputs of the median filter according to the invention, as defined in claim 1, are selected so that:
1) no pixel alone acts on more than half of the inputs of the median filter. This ensures that the drop-out pixel will not control the output of the median filter.
2) a majority of the inputs are taken from the original line of the drop-out pixel. This ensures that the original pixel is retained, if the value of the pixel does not change compared with a different field, because then this is not a drop-out pixel.
3) a majority of the inputs are selected from the field of the examined pixel. This ensures that the picture is not changed and that the picture quality is not reduced nor the picture distorted, if it contained movement.

Further the method according to the invention effectively can remove drop-outs by using a drop-out detector before the filtering, the detector discriminating drop-outs from horizontal lines. If the picture contains a thin horizontal line, which appeared also in the previous picture, then the line is not drop-out noise but a line belonging to the picture and it must not be removed. Therefore the drop-out detector compares the picture at hand with the previous picture or with the next picture in order to check if the horizontal line of the picture appeared earlier. The localized drop-out is replaced by interpolation with an adaptive filter, which the detector switches on when a drop-out pixel is localized. In other words, the identified drop-outs are replaced so that suitable values for the drop-out pixels are found by examining pixels, which are in the immediate vicinity of the drop-out pixel and which have a vertical position different from that of the drop-out, or by examining corresponding pixels or pixels in the immediate vicinity in different pictures.

The invention is characterized in that the inputs of the median filter are selected so that a single pixel must not act on the majority of the filter inputs, that the majority of the filter inputs must comprise pixels from the original line, and that the majority of the filter inputs must comprise pixels from the examined field.

The method according to the invention is illustrated below with reference to the enclosed figures, in which:
- figure 1a: shows the use of a three-point median filter according to the method;
- figure 1b: illustrates the location of samples according to figure 1a in different fields;
- figure 2a: shows the use of a five-point median filter according to the method;
- figure 2b: illustrates the location of samples according to figure 2a in different fields; and
- figure 3: shows the principle of the use of the drop-out detector according to the method.

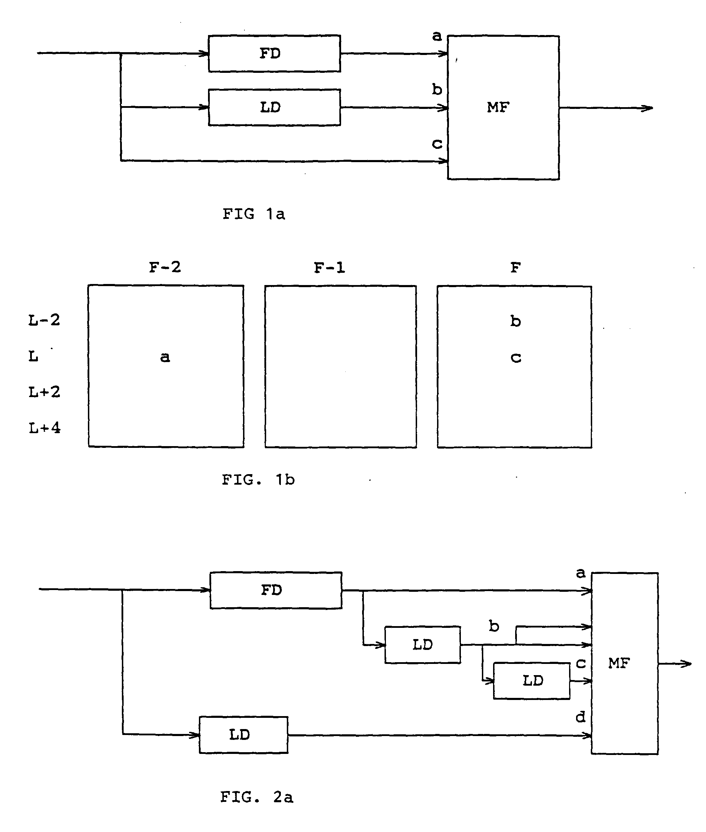

Figure 1a shows an example of selecting three samples a, b and c as inputs for a three-point median filter MF. In the figure it is seen that the sample a is delayed one frame (Frame Delay, FD), the sample b is delayed one line (Line Delay, LD), and the sample c is the examined pixel. In the figure it is also seen, that no sample a, b or c will acts on more than half of the inputs of the filter MF, as the condition 1) above requires. In figure 1b it is seen that the majority of the samples, i.e. both sample a and sample c are selected from the examined line, from the line L, as the condition 2) above requires. Also the majority of the samples, or the samples b and c are selected from the examined field, from the field F, as the condition 3) above requires. The selection criteria for the median filter according to the method are thus fulfilled.

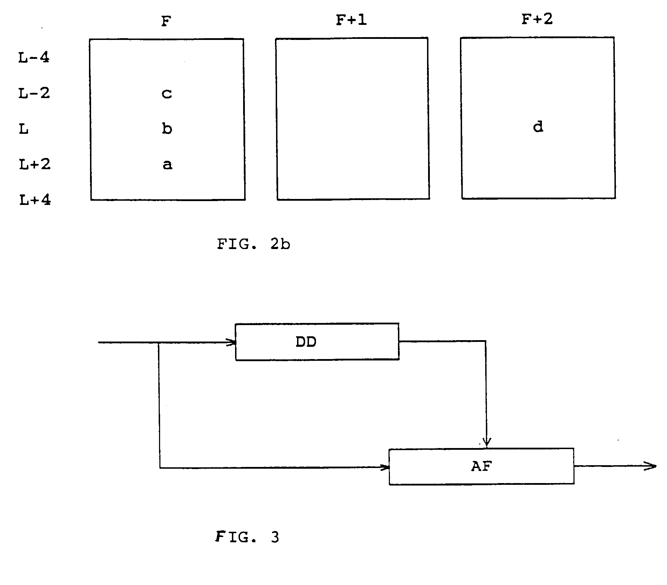

Figure 2a shows an example of selecting the inputs for a five-point median filter from four samples a, b, c and d. The inputs are selected so that the samples a, c and d act on only one input, and the sample b acts on two inputs or on less than half of the inputs. The condition 1) according to the method is thus fulfilled. Figure 2b shows in more detail how the pixels which are selected as inputs are located on different lines in different fields. Three samples, b twice and d, are from the examined line, line L, and the sample c is delayed one line compared with the examined line so that it corresponds to the line L-2, and the sample a corresponds to the next line L+2. Thus the majority of the inputs, b twice and d, are selected from samples which are taken from the original line according to condition 2). Four inputs receive the samples a, b twice and c, which are taken from the examined field F, thus fulfilling condition 3), and one input receives the sample d from the next picture, from field F+2.

Figure 3 shows the use of the drop-out detector DD in connection with an adaptive filter AF. The drop-outs have strongly varying appearances and therefore they are difficult to identify. They resemble usual thin lines, which have the width of one pixel and appear in the original picture, and which thus should not be removed. A localized drop-out is replaced by interpolation in an adaptive filter, which the detector switches on when the drop-out pixel is localized. In other words, the localized drop-outs are replaced so that suitable values for the drop-out pixels are found by examining pixels in the immediate vicinity of the drop-out pixel, these pixels having a vertical position different from that of the drop-out, or by examining corresponding or adjacent pixels in other pictures. Thus the detector looks for the drop-outs and switches on the adaptive filter AF, which may be a linear of non-linear filter, and which replaces the drop-out pixels by interpolation.

The advantage of the method according to the invention is a better picture quality as compared with removal of noise of the drop-out type with the aid of a median filter, to which the inputs are selected only from the one and the same picture. Because the inputs for the non-linear filter, such as the median filter, are selected from more than one picture no horizontal lines belonging to the picture are removed as drop-out noise. Thus the method effectively removes drop-outs without reducing picture quality. With the aid of the drop-out detector all drop-outs are found without mistaking them for thin horizontal lines belonging to the picture. The removal of drop-out according to the method with the aid of a filter or with the aid of a filter and a drop-out detector in front of it, both provide a picture with good quality without drop-out noise.

## Claims

1. A method for removing drop-out noise in a television picture, in which, in addition to a pixel (c) to be examined, additional pixels are input to a median filter (MF), said additional pixels either having a different vertical position or coming from a different picture frame with respect to said pixel to be examined,
characterized in that the inputs of the median filter (MF) are selected so that:
- a single pixel does not act on the majoritiy of the filter inputs,
- the majority of the filter inputs comprises pixels (a, b) from the same line as said pixel (c) to be examined, and
- the majority of the filter inputs comprises pixels (a, b) from the same picture frame as said pixel to be examined.

2. Method according to claim 1, **characterized** in that a pixel located in the same place as the examined pixel but in a different picture can be selected as a pixel to be used in the filtering.

3. Method according to claim 1, **characterized** in that drop-out noise in the picture is localized before filtering with the aid of a detector.

4. Method according to claim 3, **characterized** in that the detector utilizes information from more than one picture to identify drop-out noise.

5. Method according to claim 3, **characterized** in that the detector switches the filter on when it localizes a drop-out pixel.

6. Method according to any previous claim 3 - 5, **characterized** in that the localized drop-outs are replaced so that suitable values are found for the drop-out pixels by examining pixels in the immediate vicinity of the drop-out pixel, these pixels having a vertical position different from that of the drop-out.

7. Method according to any previous claim 3 - 5, **characterized** in that the localized drop-outs are replaced so that suitable values are found for the drop-out pixels by examining corresponding or adjacent pixels in other pictures.

## Patentansprüche

1. Verfahren zur Unterdrückung von Drop-out-Störungen in einem Fernsehbild, bei dem zusätzlich zu einem zu überprüfenden Pixel (c) weitere Pixel als Eingang einem Medianfilter (MF) zugeführt werden, wobei die weiteren Pixel entweder eine unterschiedliche vertikale Lage haben oder von einem unterschiedlichen Bild in bezug auf das zu prüfende Pixel herrühren,
dadurch gekennzeichnet, daß die Eingänge des Medianfilters (MF) derart gewählt sind, daß:
- ein einziges Pixel nicht auf die Mehrzahl der Filtereingänge einwirkt,
- die Mehrzahl der Filtereingänge Pixel (a, b) aus der gleichen Zeile umfaßt, in der das zu überprüfende Pixel (c) liegt, und
- die Mehrzahl der Filtereingänge Pixel (a, b) aus dem gleichen Bild umfaßt wie das zu prüfende Pixel.

2. Verfahren nach Anspruch 1,
dadurch gekennzeichnet, daß ein Pixel, das an der gleichen Stelle wie das zu prüfende Pixel liegt, aber in einem anderen Bild befindlich ist, als Pixel gewählt werden kann, welches bei der Ausfilterung benutzt wird.

3. Verfahren nach Anspruch 1,
dadurch gekennzeichnet, daß die Drop-out-Störung im Bild lokalisiert wird, bevor eine Filterung unter Zuhilfenahme eines Detektors erfolgt.

4. Verfahren nach Anspruch 3,
dadurch gekennzeichnet, daß der Detektor Informationen aus mehr als einem Bild benutzt, um die Drop-out-Störung zu identifizieren.

5. Verfahren nach Anspruch 3,
dadurch gekennzeichnet, daß der Detektor die Filter anschaltet, wenn er in Drop-out-Pixel lokalisiert.

6. Verfahren nach einem der vorhergehenden Ansprüche 3 bis 5,
dadurch gekennzeichnet, daß die lokalisierten Drop-out-Pixel so ersetzt werden, daß geeignete Werte für die Drop-out-Pixel dadurch aufgefunden werden, daß die Pixel in unmittelbarer Nachbarschaft des Drop-out-Pixels überprüft werden, und diese Pixel besitzen eine Vertikallage, die unterschiedlich ist von der Vertikallage des Drop-out-Pixels.

7. Verfahren nach einem der vorhergehenden Ansprüche 3 bis 5,
dadurch gekennzeichnet, daß die lokalisierten Drop-out-Pixel so ersetzt werden, daß geeignete Werte für die Drop-out-Pixel dadurch aufgefunden werden, daß entsprechende oder benachbarte Pixel in anderen Bildern überprüft werden.

## Revendications

1. Procédé de suppression du bruit de perte de niveau dans une image de télévision, dans lequel on entre dans un filtre médian (MF), en plus d'un pixel (c) devant être examiné, des pixels supplémentaires qui soit ont une position verticale différente soit proviennent d'une trame d'image différente par rapport audit pixel à examiner, caractérisé en ce que les entrées du filtre médian (MF) sont choisies de telle sorte que :
- un seul pixel n'agit pas sur la majorité des entrées du filtre,
- la majorité des entrées du filtre comprend des pixels (a, b) provenant de la même ligne que ledit pixel à examiner (c), et
- la majorité des entrées du filtre comprend des pixels (a, b) provenant de la même trame d'image que ledit pixel à examiner.

2. Procédé selon la revendication 1, caractérisé en ce qu'un pixel situé au même emplacement que le pixel examiné, mais dans une image différente, peut être choisi comme pixel à utiliser dans le filtrage.

3. Procédé selon la revendication 1, caractérisé en ce que le bruit de perte de niveau est localisé dans l'image avant le filtrage au moyen d'un détecteur.

4. Procédé selon la revendication 3, caractérisé en ce que le détecteur utilise une information provenant de plus d'une image pour identifier le bruit de perte de niveau.

5. Procédé selon la revendication 3, caractérisé en ce que le détecteur commute le filtre sur "marche" quand il localise un pixel avec perte de niveau.

6. Procédé selon l'une quelconque des revendications 3 à 5, caractérisé en ce que les pertes de niveau localisées sont remplacées de telle sorte que des valeurs appropriées sont trouvées pour les pixels avec perte de niveau par examen des pixels se trouvant au voisinage immédiat du pixel avec perte de niveau, ces pixels ayant une position verticale différente de celle du pixel avec perte de niveau.

7. Procédé selon l'une quelconque des revendications 3 à 5, caractérisé en ce que les pertes de niveau localisées sont remplacées de telle sorte que des valeurs appropriées sont trouvées pour les pixels avec perte de niveau par examen de pixels correspondants ou adjacents dans d'autres images.
